# FASCICULE DE BREVET EUROPEEN

(11) **EP 0 459 928 B1**
(45) Date de publication et mention de la délivrance du brevet: **03.05.1995**
(21) Numéro de dépôt: 91460033.3
(22) Date de dépôt: 29.05.1991
(51) Int. Cl.: C02F 1/78, B01D 53/00, C02F 1/76, C02F 1/72, C02F 1/32

(54) **Installation pour le traitement de flux de liquides à contacteur monophasique, et dispositifrecirculateur-dégazeur pour une telle installation**
Einrichtung zur einphasigen Behandlung von Flüssigkeitsströmen in einem Kontaktapparat sowie zugehöriger Rückführungsentgaser
Plant for treating a liquid flux in one phase contactor and recirculation de-gassing device

(30) Priorité: 31.05.1990 FR 9006969
(43) Date de publication de la demande: 04.12.1991
(73) Titulaire: ANJOU RECHERCHE (GROUPEMENT D'INTERET ECONOMIQUE DIT:), 75008 Paris (FR)
(72) Inventeur: Martin, Nathalie, F-75013 Paris (FR); Faivre, Michel, F-78260 Acheres (FR); Bourbigot, Marie-Marguerite, F-92380 Garches (FR); Laplace, Christian, F-92700 Colombes (FR)
(74) Mandataire: Corlau, Vincent

(56) Documents cités:
- DE-A- 2 045 603
- FR-A- 1 062 139
- FR-A- 2 247 426
- FR-A- 2 558 818
- FR-A- 2 614 016
- US-A- 4 072 613
- US-A- 4 197 200

## Description

Installation pour le traitement de flux de liquides à contacteur monophasique, et dispositif recirculateur-dégazeur pour une telle installation.

Le domaine de l'invention est celui du traitement des liquides. Plus précisément, l'invention concerne la mise en contact de liquides, et notamment d'eau potable ou d'eau résiduaire, avec un gaz de traitement. Un exemple particulier d'application de l'invention est l'ozonation de liquides.

L'invention peut s'appliquer à de nombreux domaines où il est nécessaire d'assurer un contact d'une durée minimale fixée entre une phase liquide et une phase gazeuse. A titre d'exemple, on peut notamment citer les opérations de désinfection, oxydation, désodorisation, ou décoloration.

D'autres applications apparaîtront également aisément à l'homme du métier, en particulier dans le traitement des eaux usées : urbaines, des industries agro-alimentaire, pharmaceutique, chimique, etc.. et également dans de nombreux procédés de fabrication industrielle.

L'installation de l'invention permet de traiter tout type de liquide avec tout type de gaz, par exemple l'oxygène, le chlore, le dioxyde de carbone, ou le dioxyde de soufre.

En ce qui concerne les installations de désinfection par ozone, on connaît déjà des cuves de désinfection, à contacteurs à diffusion d'ozone par poreux. De telles installations, telle que celle decrite dans US-A 4 072 613, présentent de nombreux inconvénients, dus essentiellement à l'absence de maîtrise de l'hydrodynamique dans les cuves. En effet, le milieu de traitement est diphasique, c'est à dire qu'il est constitué d'une émulsion liquide à traiter/gaz de traitement sous forme de bulles de tailles variables, génératrice d'écoulements turbulents. En connait également dans l'état de la technique des contacteurs gaz-liquide, tels que celui décrit dans DE-A 2 045 603 ou FR-A-1 062 139 montrant les mêmes inconvenients

On constate ainsi des problèmes d'équirépartition des débits, dus à des phénomènes d'écoulements hétérogènes, de tourbillons, de zones mortes et de courts-circuits hydrauliques dans le flux traité, et des problèmes d'homogénéité de la concentration en gaz de traitement.

Pour assurer le temps de contact minimal nécessaire pour la totalité du liquide à traiter, il faut maintenir un temps de passage moyen important dans les réacteurs. Cela nécessite notamment des ouvrages surdimensionnés, onéreux et consommateurs d'espace.

En outre, les installations à diffusion de gaz par poreux laissent souvent apparaître de nombreux problèmes dus au vieillissement des poreux.

L'installation de l'invention a pour objectif de pallier ces différents inconvénients de l'état de la technique.

Plus précisément, un objectif de l'invention est de fournir une installation de traitement d'un flux de liquide dans laquelle l'opération de mise en contact d'un gaz de traitement à épuiser avec le liquide à traiter est optimisée. En d'autres termes, l'invention a pour objectif de fournir une installation à rendement élevé, en maitrisant notamment les mouvements hydrodynamiques.

Un objectif particulier de l'invention est de fournir une telle installation nécessitant un volume réduit et optimisé du génie civil.

Un autre objectif de l'invention est de fournir une installation de traitement à temps minimisé de passage du liquide à traiter dans les réacteurs, tout en respectant les temps de contacts minimaux.

L'invention a également pour objectif de maximiser et homogénéiser l'opération de traitement du liquide à traiter, notamment dans le cas de la désinfection.

Un autre objectif de l'invention est de bénéficier des caractéristiques des installations actuelles, dans lesquelles on ne rencontre plus de problème de perte de charge. En effet, dans les installations actuelles, on procède généralement à une double ozonation, ce qui exige un repompage. Il n'est donc pas handicapant de dimensionner ce repompage de façon à accepter des pertes de charge supplémentaires dans la chaîne de traitement. La conception de l'invention est donc compatible avec ces exigences. Le dispositif de l'invention aura la possibilité de s'intégrer dans la ligne piézométrique d'une installation existante.

Un objectif particulier de l'invention est de fournir un dispositif de dissolution forcée d'un gaz de traitement dans un liquide à traiter, produisant un milieu de traitement monophasique, pouvant notamment être mis en oeuvre dans l'installation de l'invention, mais également dans de nombreuses autres chaînes de traitement.

Ces objectifs ainsi que d'autres qui apparaîtront par la suite, sont atteints à l'aide d'une installation pour le traitement de flux de liquides selon la revendication 1. Dans cette installation lesdits liquides sont mis en contact avec un gaz de traitement pendant un temps de traitement prédéterminé dans les étapes successives suivantes :
- adjonction dudit gaz de traitement audit flux de liquides, de façon à obtenir une émulsion gaz-liquides homogène, ou milieu de traitement diphasique ;
- épuisement du gaz de traitement contenu dans ledit milieu de traitement diphasique, par dissolution forcée dudit gaz de traitement dans ledit flux de liquides et dégazage dudit milieu de traitement, de façon à obtenir un milieu de traitement monophasique, comprenant uniquement des liquides et du gaz de traitement dissous ;
- écoulement en piston dudit milieu de traitement monophasique pendant ledit temps de traitement prédétermine.

Le traitement de liquides est ainsi divisé en trois étapes successives distinctes, l'adjonction de gaz au liquide, la dissolution complémentaire et le dégazage, correspondant notamment à l'amorçage de la réaction, et la réaction principale dans un réacteur de type piston. Il est nécessaire de clairement distinguer et séparer ces trois phases, notamment pour qu'aucune perturbation ne vienne interférer dans la phase de contact.

Par dégazage, on entend la séparation des phases gazeuse et liquide, et l'obtention d'un milieu monophasique. En revanche, cela ne signifie en aucune manière le stripping (stripage) du gaz dissous, résultat opposé à celui souhaité.

L'étape intermédiaire de dissolution forcée produit un milieu de traitement homogène et monophasique, qui permet d'assurer un écoulement piston dans les moyens-contacteurs, dont le volume peut alors être réduit, par rapport à l'art antérieur. En effet, toutes les installations connues réalisent la phase de contact sur un milieu diphasique, ce qui provoquent des écoulement turbulents. L'invention apporte une solution à un problème nouveau, jamais posé dans l'art antérieur, à savoir l'obtention d'un milieu de traitement monophasique, générateur d'un écoulement en piston.

Par milieu monophasique, on entend aussi bien milieu réellement monophasique que milieu quasi monophasique, c'est à dire pouvant comprendre des micro-bulles de gaz, non perturbatrices de l'écoulement en piston.

De façon préférentielle, lesdits moyens d'injection du gaz de traitement comprennent au moins un mélangeur statique et/ou au moins un injecteur, par exemple du type injecteur venturi.

Avantageusement, lesdits moyens de dissolution et de dégazage sont constitués par un dispositif recirculateur comprenant deux chambres séparées par une paroi sensiblement verticale, communiquant entre elles à leurs parties inférieure et supérieure, ledit dispositif comprenant :
- dans sa partie inférieure, des moyens d'injection dudit milieu de traitement dans l'une des chambres ;
- dans sa partie supérieure, des moyens de recirculation et de dissolution complémentaire de gaz de traitement non dissous ;
- des moyens d'évacuation dudit milieu de traitement en direction desdits moyens-contacteurs ;
de telle façon que ledit milieu de traitement soit brassé dans un flux circulaire rebouclé d'une chambre à l'autre.

De cette façon, le gaz de traitement est dissous au maximum, et le mélange est homogène.

De façon préférentielle, lesdites chambres sont constituées d'une première chambre centrale formant cheminée, entourée d'une seconde chambre annulaire.

De tels dispositifs recirculateurs sont déjà connus en eux-même, et décrits par exemple dans le document de brevet américain US-4 072 613 au nom d'ALIG. Toutefois, le rôle de ces dispositifs connus est très éloigné de celui du dispositif de l'invention. En effet, ces recirculateurs sont utilisés seuls pour l'ozonation, qui se réalise donc en milieu diphasique. Selon l'invention, le recirculateur est inséré entre un mélangeur et un contacteur, et à pour objectif précis de transformer une émulsion gaz-liquide en un milieu monophasique.

Ladite paroi de séparation des chambres présente avantageusement des lumières de traversée de portions dudit flux du milieu de traitement.

Dans un mode de réalisation préférentiel de l'invention, au moins une desdites chambres comporte des moyens de recirculation forcée dudit milieu de traitement dans ledit sens de recirculation et /ou de dissolution dynamique dudit gaz de traitement dans le milieu de traitement, notamment par pulvérisation des bulles de gaz présentes dans le milieu de traitement.

Avantageusement, au moins l'une desdites chambres comporte des moyens de brassage forcé de la surface supérieure dudit milieu de traitement de façon à provoquer la reprise et la recirculation des évents de dégazage dudit dispositif et/ou la pulvérisation des bulles de gaz de traitement.

Lesdits moyens de recirculation forcée et/ou lesdits moyens de brassage sont constitués de façon avantageuse par une hélice entraînée mécaniquement ou autre, située dans ladite chambre centrale formant cheminée.

Une ou plusieurs hélices peuvent également être placées dans la chambre annulaire. Le placement d'une hélice tient notamment compte du sens de circulation du flux dans le dispositif recirculateur, de l'emplacement des moyens d'injection (injection dans la cheminée centrale ou la chambre annulaire, au niveau supérieur ou inférieur du dispositif recirculateur), et de l'objectif principal de l'hélice (favoriser la recirculation des flux liquide et gazeux, ou favoriser l'épuisement des gaz, par pulvérisation des bulles de gaz, et l'homogénéisation du mélange).

Dans un mode de réalisation particulier, notamment destiné à améliorer le dégazage et l'homogénéisation, l'hélice est entraînée en contre-rotation par rapport au sens de circulation du milieu de traitement. Cela permet en particulier la pulvérisation des bulles de gaz qui remontent vers la surface, et augmente donc le taux de dissolution du gaz de traitement.

Ce dispositif recirculateur-dégazeur peut également comprendre des moyens d'ajoût d'un réactif audit flux de liquide à traiter, tel qu'un catalyseur solide ou liquide, couplé avec un procédé physique, par exemple du type ultraviolet.

De façon préférentielle, le temps de contact dudit flux de liquide avec ledit gaz de traitement dans ledit dispositif recirculateur est inférieur à 60 secondes.

L'évacuation du flux de liquide traité dudit dispositif recirculateur vers lesdits moyens-contacteurs peut notamment se faire par l'intermédiaire d'au moins un des moyens suivants :
- orifices,
- couronnes,
- crépines,
ladite évacuation se faisant au niveau du fond dudit dispositif recirculateur et/ou au niveau de sa paroi verticale.

Avantageusement, lesdits moyens-contacteurs comprennent au moins l'un des dispositifs suivants :
- cuve chicanée,
- canalisation,
- réseau de canalisations en parallèle empilées et/ou superposées.

Ces moyens-contacteurs sont constitués de façon à se comporter comme des réacteurs sièges d'écoulement de type piston.

Préférentiellement, lesdits moyens-contacteurs comprennent des moyens d'injection desdits gaz de traitement non dissous récupérés dans ladite partie supérieure du dispositif recirculateur, et/ou de gaz de traitement frais, asservis à des moyens de maintien de la qualité d'eau en fin de traitement.

Il peut en effet être intéressant d'ajouter à ce niveau du gaz de traitement frais, éventuellement différent du premier gaz de traitement, la qualité de l'eau ayant changé en entrée, et donc en sortie du dispositif recirculateur. Cette solution est également utilisable dans le cas où un traitement étagé est plus avantageux.

Ces moyens contacteurs peuvent notamment comprendre au moins une colonne de dissolution sensiblement verticale, dans laquelle ledit liquide circule de haut en bas, ladite colonne comportant dans sa partie supérieure une chambre d'introduction en continu desdits gaz de traitement.

De façon avantageuse, ladite colonne comporte également une hélice d'aspiration entraînée en rotation dans le sens de circulation dudit liquide, et éventuellement localement une paroi médiane coopérant avec ladite hélice de façon à former un dispositif de recirculation.

Une telle installation peut avantageusement comprendre des moyens de traitement d'une fraction prédéterminée du flux total de liquide à traiter, lesdits moyens de traitement de fraction de flux coopérant avec des moyens de mélange en ligne dans une zone turbulente de ladite fraction du flux traitée avec le reste du flux.

Dans une autre configuration avantageuse, l'installation comprend au moins deux dispositifs comprenant des moyens d'adjonction, un dispositif recirculateur et des moyens-contacteurs, montés en parallèle sur une même canalisation de liquide à traiter, et des moyens de sélection du nombre desdits dispositifs actifs, en fonction du volume de liquide à traiter.

Ledit gaz de traitement peut notamment appartenir au groupe comprenant l'ozone, l'air ozoné, l'oxygène, le dioxyde de soufre, le dioxyde de carbone et le chlore.

D'autres caractéristiques et avantages de l'invention apparaîtront à la lecture de la description suivante de modes de mise en oeuvre préférentiels de l'installation de l'invention et des dessins annexés, dans lesquels :
- la figure 1 présente, sous forme d'organigramme, le principe de base de l'invention, à savoir la décomposition en trois étapes de l'opération de traitement de liquides ;
- la figure 2 est le schéma de principe général d'une installation selon l'invention, faisant apparaître les trois étapes de traitement précisées en figure 1;
- les figures 3, 4 et 5 présentent trois configurations possibles pour le dispositif recirculateur-dégazeur de la figure 2, dans lesquelles on fait varier la position des moyens d'évacuation (figures 3 et 4) et/ou le sens de recirculation du liquide (figure 5) ;
- la figure 6 est le schéma d'un dispositif recirculateur équipé d'une turbine, de façon à améliorer la recirculation et la dissolution des gaz de traitement;
- la figure 7 donne les ordres de grandeur du dimensionnement d'un tel recirculateur, à titre d'exemple particulier de réalisation ;
- les figures 8 et 9 illustrent deux possibilités d'implantation des moyens contacteurs par rapport au dispositif recirculateur, à savoir concentrique (figure 8) et asymétrique (figure 9) ;
- la figure 10 présente le schéma de moyens contacteurs comprenant des moyens de réinjection des gaz d'évents récupérés dans le dispositif recirculateur.

L'invention a donc pour objectif de fournir un procédé de traitement réalisant le contact entre le liquide à traiter et le gaz de traitement dans un milieu monophasique, de façon à limiter le volume des installations, en assurant un écoulement en piston.

Aucune des installations connues ne réalise de traitement sur un milieu monophasique. Plus précisément, ces installations ne cherchent nullement à obtenir un écoulement en piston, mais plutôt, parfois, à provoquer des turbulences destinées à améliorer le contact. L'invention considère donc l'aspect du contact d'une façon totalement nouvelle, en proposant de travailler sur un milieu monophasique. Cette nouvelle approche nécessite l'utilisation d'un procédé particulier, comprenant trois étapes distinctes.

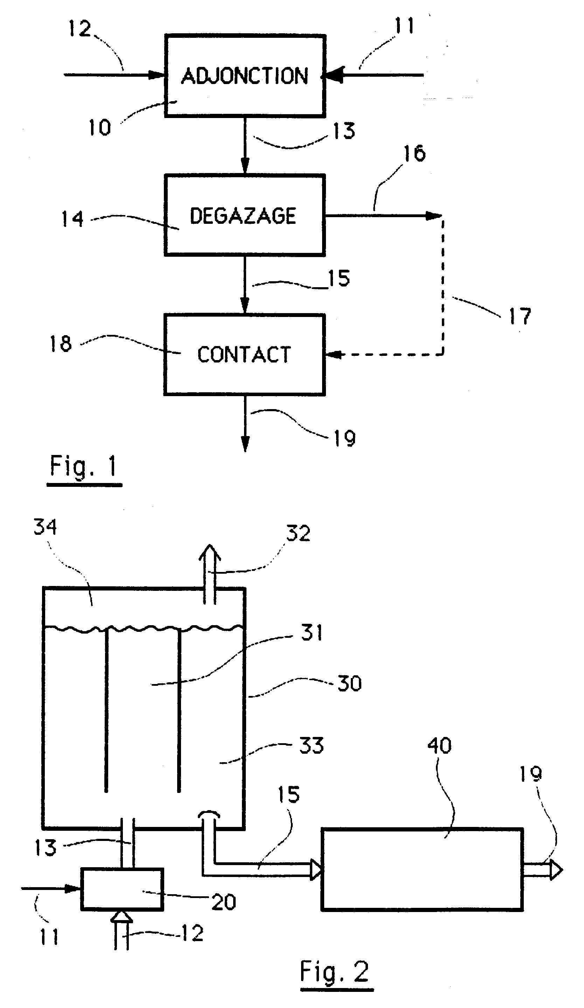

Le principe de base de l'invention consiste en effet à effectuer l'opération de traitement de liquides en trois étapes, ainsi que l'illustre la figure 1, qui présente le procédé de l'invention sous forme d'organigramme.

La première étape 10 est une étape d'adjonction d'un gaz de traitement 11 au liquide à traiter 12, ou transfert. Cette étape aboutit à la réalisation d'une émulsion gaz/liquide 13.

Le taux de traitement et la concentration du gaz adjoint au liquide à traiter peuvent être variables en fonction de la qualité du liquide à traiter et/ou de la concentration souhaitée en gaz dissous dans le liquide. Le liquide peut éventuellement recevoir de plus un conditionnement chimique préalable en amont de recirculateur.

La seconde étape 14 comporte une dissolution complémentaire et un dégazage permettant l'élimination du gaz lors du transfert 10. Ce dégazage 14, c'est-à-dire notamment la récupération des évents, permet ainsi de traiter par la suite non pas un milieu diphasique (gaz + liquide), générateur d'écoulement hétérogène, mais un milieu 15 réellement monophasique (liquide + gaz dissous). Les évents 16 (gaz éliminé), peuvent éventuellement être récupérés, confinés et réinjectés en aval (17).

La dernière étape 18 est une phase de contact monophasique du liquide avec le gaz dissous. Dans cette phase, il peut y avoir régulation du taux de gaz de traitement en fonction de la qualité du liquide traité 19. En plus des évents récupérés et réinjectés 17, il est également possible d'injecter de l'ozone frais.

Par rapport aux cuves de traitement de liquides et notamment aux cuves de désinfection de l'art antérieur, il est à noter que l'invention réalise physiquement la séparation du traitement en deux étapes indispensables (transfert 10 et contact 18). Cette séparation permet d'envisager la réalisation d'installations de taille réduite, et donc de mieux maîtriser, outre les problèmes de génie civil, l'hydrodynamique. Par ailleurs, la phase intermédiaire de dégazage 14 permet de travailler en hydraulique monophasique lors de l'étape de contact 18.

Il est alors beaucoup plus aisé de contrôler l'écoulement, et en particulier d'approcher un écoulement en piston. En effet, la présence de bulles dans le liquide perturbe la circulation de ce liquide. La maîtrise de l'écoulement permet d'une part d'assurer un traitement homogène de tout liquide et d'autre part de réduire le temps global de traitement.

Afin d'assurer la désinfection des eaux par l'ozone, il est nécessaire de maintenir un résiduel (concentration) d'ozone dissous C pendant un temps T. L'obtention d'une eau de qualité sans avoir à surozoner l'eau, ni surdimensionner les cuves passe donc par l'obtention d'un même temps T de contact pour toute la masse d'eau et d'un même résiduel C dans tout le volume. Pour les installations classiques à écoulement hétérogène, on a par exemple proposé de définir le CT en prenant en compte non pas le temps moyen mais le temps t_{10%} (mesuré par traçage hydrodynamique), qui correspond au temps minimal de séjour de 90 % du débit d'eau. Les études menées sur cuves industrielles ont permis de constater que t_{10%} était au mieux égal à 50 % de t_{moyen}. Par conséquent, le dimensionnement fondé sur t_{10%} égal, par exemple, à 4 minutes passe par un dimensionnement global du volume pour un temps moyen d'au moins 8 minutes.

L'obtention d'un écoulement piston, comme visé par l'invention, permet d'éviter de tels surdimensionnements, du fait que :
- plus un réacteur est de petite dimension, c'est-à-dire plus le temps de séjour est faible, moins le système a des chances d'être dispersif ;
- plus un réacteur se rapproche d'un réacteur "piston", plus son efficacité est grande, en gagnant en dimensionnement (t_{10%} / t_{moyen}), en efficacité pour les cinétiques d'ordre 1 ou 2, et en régulation.

Le schéma général d'une installation de traitement de liquides ou de gaz selon le principe de l'invention est représenté en figure 2.

Dans cet exemple de réalisation, on considère que le liquide à traiter est de l'eau, et par exemple de l'eau à désinfecter, et le gaz de traitement de l'ozone ou de l'air ozoné. Toutefois, il est clair qu'une telle installation peut être utilisée pour tout autre type de liquide à traiter, quelque soit le traitement, et avec tout type de gaz de traitement (O₂, CO₂, Cl₂, SO₂...). Il est également envisageable, en adaptant l'étape 10 de transfert, que le réactif soit de type solide (poudre, charbon, catalyseur...) ou liquide (bisulfite, peroxyde, eau oxygénée,...).

De façon globale, l'installation de traitement de l'invention comprend trois modules distincts :
- un module 20 d'adjonction du gaz de traitement 11 au liquide à traiter 12 ;
- un module 30 de dissolution forcée du gaz de traitement 11 dans le liquide 12;
- un module-contacteur 40, dans lequel le milieu de traitement dégazé subit un écoulement du type piston pendant le temps de traitement fixé.

Le module 20 d'adjonction, ou transféreur, réalise une émulsion 13 gaz-liquide, c'est-à-dire un mélange diphasique, le plus homogène possible, comprenant le liquide 12 avec des bulles de gaz dissous.

L'émulsion 13 est introduite dans le module 30 de dissolution forcée, qui a essentiellement pour but de transférer l'ozone, ou tout autre gaz de traitement, dans le liquide à traiter et de fournir un milieu monophasique liquide 15 en sortie du module 30. Il peut notamment s'agir d'un dispositif recirculateur, comprenant une cheminée d'épuisement 31, un évent de dégazage 32, et une chambre annulaire 33 de recirculation forcée coaxiale à la cheminée d'épuisement 31. La recirculation a pour objectif d'assurer un contact suffisant de l'ensemble de l'eau à traiter avec l'ozone, et de dissoudre le maximum d'ozone possible.

Le milieu de traitement monophasique 15 est ensuite transmis au module contacteur 40, qui assure un temps de contact suffisant eau-ozone, en particulier vis à vis des normes en vigueur, et fournit en sortie le liquide traité 19.

Les différentes canalisations reliant les modules 20,30 et 40 peuvent être de section quelconque, et par exemple cylindrique, ovoïde, rectangulaire ou trapézoïdale. De même, ces différents modules 20,30 et 40 peuvent être de section quelconque.

On présente ci-dessous de façon plus précise différents modes de réalisation de chacun des modules constitutifs de l'installation de l'invention.

Le module 20 d'adjonction est préférentiellement du type mélangeur statique ou injecteur de type venturi.

Les mélangeurs statiques sont des dispositifs à haut taux de cisaillement, pouvant traiter tout ou partie du volume d'eau. Ces dispositifs, de type connu, se présentent sous la forme d'une canalisation contenant une série d'hélices fixes, à pas contraires, de vis d'Archimède, ou tout autre type d'élément immobile implanté dans une canalisation, assurant la division du courant circulant dans cette canalisation, et formant une singularité hydraulique voulue.

Ainsi, l'eau est brassée lors de son écoulement. En ce qui concerne les opérations de désinfection, on sait que l'activité de l'ozone vis à vis des bactéries augmente si les bactéries ne se présentent pas sous forme d'agrégats. En passant au sein d'un mélangeur très turbulent, on favorise la destruction des agrégats, et donc la vulnérabilité des micro-organismes. Ces dispositifs présentent de nombreux autres avantages, et notamment :
- obtention d'une répartition homogène des bulles de gaz ;
- mélange intensif dans la direction radiale, donc homogénéisation totale de la phase dissoute ;
- spectre de temps de séjour étroit, générant un écoulement piston;
- compacité, le temps de transfert pouvant être inférieur à une seconde ;
- possibilité de faire varier le débit de gaz de traitement ;
- simplicité d'extrapolation par ajoût de modules ;
- faible entretien ;
- possibilité d'installation horizontale ou verticale ;
- investissement réduit.

Le principal inconvénient de ces dispositifs est la perte de charge qu'ils occasionnent.

Les injecteurs de type venturi permettent de réaliser le même type de contact qu'un mélangeur statique, mais a priori à plus faible perte de charge. On peut notamment utiliser des venturis améliorés, tels que ceux présentés dans la demande de brevet français 87 15219 du 3 novembre 1987, comprenant une cheminée en prolongement du divergent du venturi. De façon préférentielle, on utilise un venturi à flux moteur descendant, de façon à combiner l'effet émulseur et l'effet de colonne à bulles à co-courant vers le bas.

Avantageusement, le module 20 d'adjonction peut comprendre un mélangeur statique et un injecteur venturi en série, l'injecteur étant placé en amont ou en aval du mélangeur.

Du fait de l'encombrement d'un tel module de transfert pour des débits importants de liquide, celui-ci pourra être positionné horizontalement, seule sa sortie devant être verticale, un coude étant alors implanté entre la sortie immédiate du module 20 d'adjonction et l'entrée sur le module 30 de dissolution forcée.

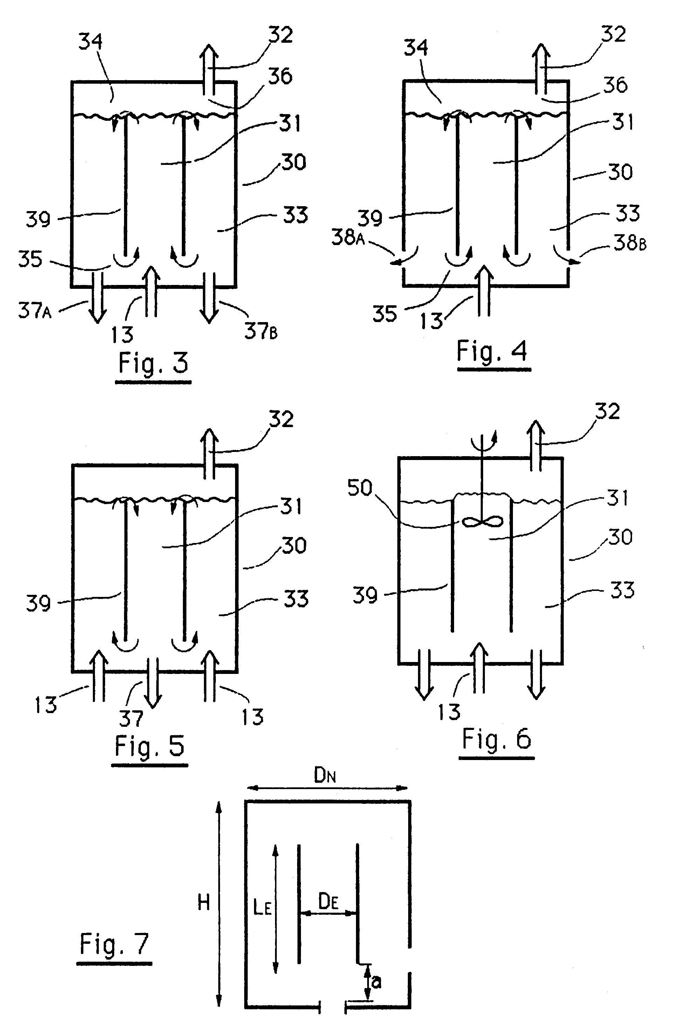

L'émulsion 13 liquide à traiter-gaz de traitement est ensuite introduite dans un module 30 de dissolution forcée. Ce module 30 peut notamment être du type recirculateur ou colonne à recirculation, ainsi que représenté en coupe en figures 3 et 4, de façon à permettre la recirculation des évents et l'épuisement du gaz.

Ce dispositif recirculateur 30 peut être par exemple de section cylindrique, ou parallélépipédique.

Ce recirculateur 30 comprend une chambre ou une cheminée 31 d'épuisement des gaz, et une chambre 33 annulaire de recirculation forcée coaxiale à la cheminée 31 d'épuisement. Les deux chambres 31 et 33 sont séparées par une paroi 39, et communiquent entre elles à leurs parties inférieure 34 et supérieure 35, de façon à permettre la recirculation du milieu de traitement dans le recirculateur. Ce dispositif 30 a pour but de dissoudre le plus possible de gaz de traitement dans le liquide à traiter et d'homogénéiser le milieu de traitement. Il permet également d'éliminer les bulles de gaz, et donc de produire un milieu monophasique, facilitant l'écoulement piston et évitant les problèmes de flottation, ou embolie gazeuse, sur des filtres en aval.

Avantageusement, les évents 36, ou gaz non dissous, peuvent être récupérés (32), et réinjectés au niveau du contacteur 40. Cela permet notamment de réguler la pression à l'intérieur du recirculateur 30. Il est également possible de réinjecter ces gaz récupérés 32 directement dans le recirculateur 30.

L'évacuation du milieu de traitement monophasique peut se faire au fond (37_{A}, 37_{B}) du recirculateur, ou ainsi que cela est présenté en figure 4, sur la paroi verticale extérieure (38_{A}, 38_{B}) du recirculateur. Cette évacuation peut notamment être effectuée par l'intermédiaire d'orifices, de couronnes, et/ou de crépines.

La figure 5 présente une variante de réalisation d'un recirculateur, dans lequel l'injection de l'émulsion 13 est faite au niveau de la couronne. Dans ce cas, le sens de recirculation va de la chambre annulaire 32 à la cheminée centrale 31. Pour homogénéiser les flux, il est alors possible de placer plusieurs injecteurs 20 sur la couronne. L'évacuation 37 du milieu de traitement monophasique se fera alors au centre du fond du recirculateur.

Dans un autre mode de réalisation, il est également possible de réaliser l'injection de l'émulsion gaz-liquide 13 par la partie supérieure du recirculateur, soit en position centrale, soit au niveau de la couronne.

De façon à améliorer la qualité du mélange et la recirculation, la paroi 39 sera avantageusement percée de lumières, ou constituée de plusieurs tronçons, créant de petites cellules de recirculation.

Avantageusement, le recirculateur peut être équipé de moyens de recirculation forcée du milieu de traitement, ainsi qu'illustré par la figure 6. Une hélice entraînée 50, ou une turbine, placée dans la cheminée centrale 31 dans le sens du mouvement, assure une meilleure circulation du milieu de traitement. Elle permet également d'améliorer la dissolution du gaz de traitement, en cassant les bulles de gaz, c'est à dire en réduisant leur taille, et en facilitant leur recirculation. Des moyens de recirculation forcée peuvent également être placés dans la chambre annulaire 33.

Préférentiellement, l'hélice 50 sera placée de façon à assurer une agitation de la partie supérieure du milieu de traitement, permettant la reprise d'évents, et donc une augmentation du taux de gaz dissous. Ce résultat peut aussi être obtenu par des moyens d'agitation de la surface ne perturbant pas la recirculation, tels que, par exemple, des battoirs.

Il est également possible de positionner l'hélice 50, ou une turbine, en opposition par rapport au sens de recirculation, de façon à améliorer la qualité du mélange.

La vitesse de rotation de l'hélice ou de la turbine est avantageusement liée aux conditions hydrauliques. Plus précisément la position et la vitesse de rotation de la turbine seront fixées en fonction du compromis coût énergétique/efficacité de l'aspiration.

La turbine étant positionnée, on pourra agir sur la vitesse de rotation de façon à être dans les conditions d'aspiration du ciel gazeux, permettant ainsi la reprise des évents.

Ces moyens destinés à forcer la recirculation du milieu de traitement, augmenter le taux de dissolution et favoriser la reprise des évents peuvent évidemment être combinés dans un même recirculateur. Leur position dans le recirculateur pourra varier, notamment en fonction de la position des moyens d'injection 20 et des moyens d'évacuation.

Dans un mode de réalisation particulier de l'invention, le recirculateur comprend également des moyens d'adjonction d'un ou plusieurs réactifs au milieu de traitement, par exemple du type catalyseur.

Il peut notamment s'agir de catalyseurs solides ou liquides, tels que l'eau oxygénée. L'ajoût d'un catalyseur est avantageusement couplé avec un procédé physique, par exemple du type ultraviolet.

La figure 7 donne des ordres de grandeur d'un exemple de dimensionnement d'un recirculateur 30. Avantageusement, le recirculateur est dimensionné de façon à approcher les rapports suivants (avec les notations suivantes : H : hauteur de recirculation ; V: volume total ; D_{N} : diamètre du recirculateur ; D_{E} : diamètre de la cheminée centrale ; L_{E} : hauteur de la paroi de la cheminée centrale ; a : écartement entre le bas de la cheminée centrale et l'extrémité de l'injecteur) :
. D_{E}/D_{N} ε [0,5 ; 0,6]
. H/D_{N} ε [4 ; 5,5]
. L_{E}/D_{E} ε [6 ; 7,5]
. a/D_{E} ≈ 0,1

Ainsi, pour une installation devant traiter 10 m³/h, le recirculateur pourra avoir les dimensions suivantes :
. H = 1 m
. V = 28 l
. D_{N} = 0,19 m
. D_{E} = 0,1 m
. L_{E} = 0,65 m
. a = 0,01 m

Pour une installation traitant entre 1300 et 1500 m³/h, le recirculateur aura une hauteur H d'environ 4 m, pour un diamètre D_{N} de l'ordre de 1 m.

De telles installations permettent d'assurer un temps de contact dans le recirculateur de l'ordre de T = 15s. De façon générale, il est souhaitable que ce temps de contact soit inférieur à 1 minute.

Un tel dispositif recirculateur-dégazeur 30 trouve clairement de nombreuses applications dans d'autres procédés industriels, nécessitant le mélange d'un gaz et d'un liquide en une seule phase liquide.

Après dissolution du gaz de traitement, le milieu de traitement monophasique 15 est dirigé vers les moyens-contacteurs 40, qui assurent un temps de contact minimum entre le liquide à traiter et le gaz de traitement dissous. Ainsi que cela a été précisé précédemment, l'obtention d'un milieu monophasique permet de réaliser un écoulement piston, et donc de réduire le temps de contact du milieu de traitement et, corollairement, le génie civil.

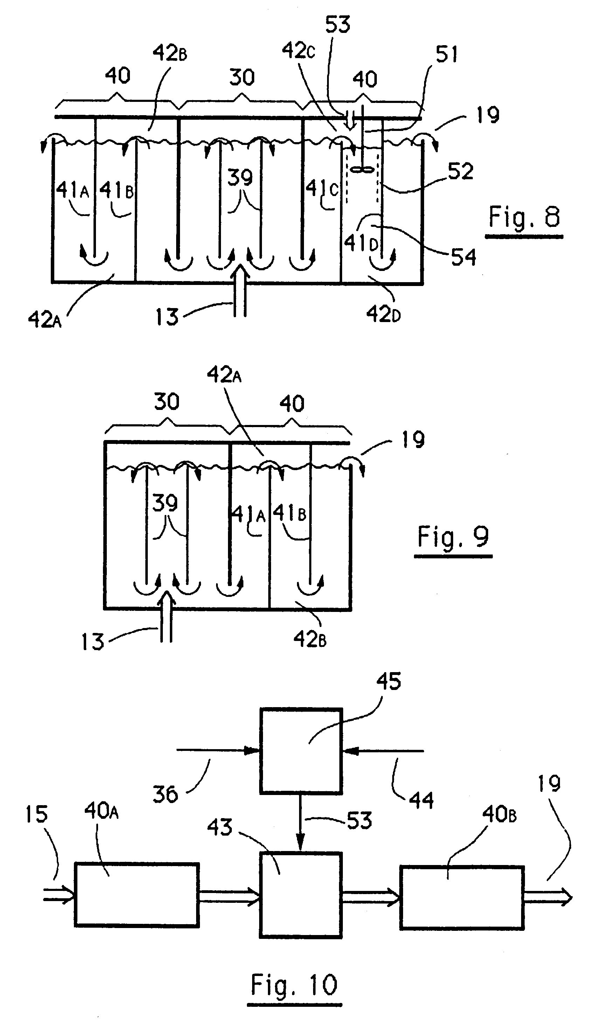

Les moyens-contacteurs 40 peuvent être des cuves chicanées, ainsi que présenté en figures 8 et 9. Ces cuves comportent un jeu de cloisons 41_{A}, 41_{B}, 41_{C}, 41_{D}, définissant, par l'intermédiaire d'ouvertures 42_{A}, 42_{B}, 42_{C}, 42_{D}, alternativement en position haute et basse, un chemin obligé pour l'ensemble du flux de liquide. Le temps de parcours de ce chemin correspond au temps de contact imposé. L'écoulement étant de type piston, chaque molécule de liquide a un temps de contact identique, correspondant par exemple au temps minimal imposé par les normes.

Les moyens-contacteurs 40 sont positionnés soit concentriquement (figure 8) autour du dispositif recirculateur 30, soit asymétriquement (figure 9), soit encore symétriquement, ou selon tout autre manière, en tenant compte notamment des contraintes d'encombrement.

Il est également possible d'utiliser comme contacteur 40 une simple canalisation, ou un réseau de canalisations en parallèle, empilées ou superposées. Il est alors nécessaire de travailler en régime turbulent, de façon à obtenir un profil de vitesse plat. On cherchera par ailleurs à éviter le plus possible les coudes. Une telle configuration présente l'avantage de ne nécessiter qu'un faible investissement.

Les évents 36 récupérés lors de l'opération 14 de dissolution forcée peuvent être réinjectés dans le milieu de traitement. La figure 10 est le schéma de moyens-contacteurs comprenant des moyens 43 de réinjection des évents. Il est également possible d'injecter du gaz de traitement frais 44, c'est-à-dire non déjà utilisé, de façon à optimiser la qualité de l'eau, et/ou dans le cas où un traitement étagé est plus avantageux.

Dans ce cas, les moyens-contacteurs sont séparés en au moins deux cuves 40_{A} et 40_{B} (ou canalisations ou séries de canalisations), et un dispositif d'injection 43 est implanté entre les cuves 40_{A} et 40_{B}. Ce dispositif d'injection est par exemple du type poreux ou aérateur de surface, tel qu'un battoir. Cette injection peut être faite soit au niveau du sol, soit au niveau du ciel.

Pour ne pas disperser l'écoulement, on souhaite toujours conserver un milieu le plus possible monophasique. La réinjection se fait donc dans un volume correspondant à un temps de contact faible. On fera abstraction du temps de contact dans ce volume pour le calcul de CT de façon à considérer comme temps de séjour uniquement celui de passage dans le contacteur piston.

Si on utilise des poreux, on prendra un compartiment de petit volume, caractérisé géométriquement de façon à ne pas avoir de bulles, ni de micro-bulles (flottation) en aval. Le volume de ce compartiment correspondra par exemple à un temps de passage de l'ordre de 30 secondes.

La figure 8 comprend un dispositif (facultatif) d'injection du type aérateur de surface. L'injection est réalisée dans la colonne 54, dans laquelle le liquide à traiter circule de haut en bas. Le gaz de traitement 53 est introduit en continu dans la partie supérieure de cette colonne, et est aspiré dans le liquide à traiter.

De façon à favoriser cette aspiration, des moyens d'aspiration forcée, tels qu'une hélice 51 entraînée dans le sens de circulation du liquide, peuvent être ajoutés. Ainsi que cela a été précédemment expliqué, en liaison avec la figure 6, une telle hélice, en provoquant l'agitation du milieu de traitement, favorise la reprise des évents, et donc la dissolution du gaz de traitement.

Il est également possible de réaliser un dispositif recirculateur, permettant d'augmenter encore le taux de dissolution. Ainsi, une paroi médiane 52 peut être placée concentriquement à l'intérieur de la colonne 54, sur au moins une partie de la longueur de cette colonne. Le mouvement de l'hélice 51 provoque dans ce cas une recirculation d'une partie du liquide à traiter, de l'intérieur de la chambre définie par la paroi 52 vers la chambre annulaire constituée par cette paroi et la colonne 54. D'autres configurations d'un tel dispositif recirculateur peuvent être envisagées (dispositions d'une ou plusieurs hélices dans la chambre centrale ou la chambre annulaire, jours dans la paroi 52,...) ainsi que cela a déjà été présenté pour le recirculateur principal 30 de l'invention, en liaison avec les figures 3 à 6.

Avantageusement, la quantité de gaz 53 réinjectée sera fonction de la qualité de l'eau en fin de traitement et /ou de la concentration en gaz dissous souhaitée. Pour cela, des moyens 45 de régulation de la quantité de gaz pilote l'injecteur 43.

La réinjection de gaz peut se faire en une ou plusieurs étapes. Il est ainsi possible d'injecter des gaz 53 par l'intermédiaire de deux injecteurs successifs, intercalés entre des cuves ou canalisations. Cette configuration permet de réduire la concentration de gaz en entrée de l'injecteur 41, et d'obtenir un bon rendement énergétique, notamment lorsque la qualité du liquide à traiter est bonne et sensiblement constante.

Il est possible, dans une installation selon l'invention, d'utiliser un jeu de plusieurs dispositifs comprenant chacun des moyens d'injection, de recirculation et de contact, montés en parallèle sur une même canalisation d'alimentation en liquide à traiter. Cette implantation permet un gain de place évident. Par ailleurs, il est plus aisé de réaliser plusieurs dispositifs de petites tailles qu'un seul de taille très importante. Ces dispositifs pourront de plus être fabriqués selon un modèle unique, pour plusieurs sites différents. La capacité de traitement de chaque site sera alors fonction du nombre de dispositifs.

Plusieurs configurations sont envisageables. Notamment, ces dispositifs peuvent être montés en parallèle, ou en cascade.

Un autre avantage essentiel de cette configuration est la possibilité de sélectionner le nombre de dispositifs à mettre en oeuvre, en fonction du débit d'eau total de la canalisation à chaque instant. Ainsi, on travaillera dans chaque dispositif à débit d'eau nominal, évitant les risques d'écoulements laminaires, lorsqu'un contacteur reçoit un débit d'eau trop faible.

De plus, un débit trop faible empêcherait, dans le recirculateur, la recirculation des bulles de gaz. En effet, dans un mélange comprenant des bulles et de l'eau, la recirculation est plus aisée pour le liquide que pour les bulles de gaz.

Une telle installation peut également ne traiter qu'une fraction du flux total à traiter, la fraction étant prélevée par une dérivation. Après traitement, le milieu traité est alors mélangé avec le reste du flux, par l'intermédiaire de moyens de mélange en ligne dans une zone turbulente. La valeur de la fraction traitée peut être variable, et choisie en fonction de la qualité de l'eau à traiter, ou de la qualité de traitement voulue.

## Revendications

1. Installation pour le traitement de flux de liquides (12) selon le procédé de la revendication 1, caractérisé en ce qu'il comprend :
- des moyens (20) d'adjonction du gaz de traitement (11) au flux de liquides (12) pour former un milieu de traitement diphasique homogène (13) ;
- des moyens (30) de dissolution forcée dudit gaz de traitement (11) dans le flux de liquides (12) à traiter coopérant avec des moyens de dégazage dudit milieu de traitement diphasique (13), de façon à produire un milieu de traitement monophasique (15) ;
- et des moyens-contacteurs (40) assurant un écoulement en piston du milieu de traitement dégazé monophasique (15) pendant ledit temps de traitement prédéterminé,
lesdits moyens (30) de dissolution et de dégazage étant constitués par un dispositif recirculateur comprenant deux chambres (31,33) séparées par une paroi (39) sensiblement verticale et communiquant entre elles à leurs parties inférieure (35) et supérieure (34), et ledit dispositif comprenant :
- dans sa partie inférieure (35), des moyens d'injection dudit milieu de traitement diphasique (13) dans l'une des chambres (31,33) ;
- dans sa partie supérieure (34), des moyens (32) de recirculation et de dissolution complémentaire de gaz de traitement (36) non dissous ;
- des moyens (37 ; 37_{A},37_{B} ; 38_{A},38_{B}) d'évacuation dudit milieu de traitement dégazé monophasique (15) en direction desdits moyens-contacteurs (40) ;
de telle façon que ledit milieu de traitement (13) soit brassé dans un flux circulaire rebouclé d'une chambre à l'autre..

2. Installation selon la revendication 1, caractérisée en ce que lesdits moyens (20) d'injection dudit gaz de traitement (11) comprennent au moins un mélangeur statique et/ou au moins un injecteur.

3. Installation selon la revendication 2 caractérisée en ce que ledit injecteur est du type injecteur venturi.

4. Installation selon l'une des revendications 1 à 3, caractérisée en ce que lesdites chambres sont constituées d'une première chambre centrale (31) formant cheminée, entourée d'une seconde chambre annulaire (33).

5. Installation selon l'une quelconque des revendications 1 à 4, caractérisée en ce que ladite paroi (39) de séparation des chambres (31,33) présente des lumières de traversée de portions dudit flux du milieu de traitement (13).

6. Installation selon l'une quelconque des revendications 1 à 5, caractérisée en ce qu'au moins une desdites chambres (31,33) comporte des moyens (50) de recirculation forcée dudit milieu de traitement diphasique (13) dans ledit sens de recirculation et/ou de dissolution dynamique dudit gaz de traitement (11) dans le milieu de traitement (13).

7. Installation selon l'une quelconque des revendications 1 à 6, caractérisée en ce qu'au moins l'une desdites chambres (31,33) comporte des moyens (50) de brassage forcé de la surface supérieure dudit milieu de traitement diphasique (13) de façon à provoquer la reprise et la recirculation des évents (36) de dégazage et/ou la pulvérisation des bulles de gaz de traitement (11).

8. Installation selon l'une quelconque des revendications 6 ou 7, caractérisée en ce que lesdits moyens (50) de recirculation forcée et/ou lesdits moyens (50) de brassage sont constitués par une hélice entraînée mécaniquement ou autre située dans ladite chambre centrale (31) formant cheminée.

9. Installation selon la revendication 8 caractérisée en ce que ladite hélice (50) est entraînée en contre-rotation par rapport au sens de circulation du milieu de traitement (13).

10. Installation selon l'une quelconque des revendications 1 à 9 caractérisée en ce que ledit dispositif recirculateur (30) comprend des moyens d'ajout d'un réactif audit flux de liquide à traiter (12), tel qu'un catalyseur solide ou liquide, couplé avec un procédé physique, par exemple du type ultraviolet.

11. Installation selon l'une quelconque des revendications 1 à 10 caractérisée en ce que lesdits moyens d'évacuation du flux de liquide traité monophasique (15) dudit dispositif recirculateur (30) vers lesdits moyens-contacteurs (40) comprennent au moins un des moyens suivants :
- orifices,
- couronnes,
- crépines,
et en ce que ladite évacuation se fait au niveau du fond (37_{A},37_{B}) dudit dispositif recirculateur et/ou au niveau de sa paroi verticale (38_{A},38_{B}).

12. Installation selon l'une quelconque des revendications 1 à 11 caractérisée en ce que lesdits moyens-contacteurs (40) comprennent au moins l'un des dispositifs suivants :
- cuve chicanée,
- canalisation,
- réseau de canalisations en parallèle empilées et/ou superposées.

13. Installation selon la revendication 12 caractérisée en ce que lesdits moyens-contacteurs (40) comprennent des moyens d'injection (43) desdits gaz de traitement non dissous (36) récupérés dans ladite partie supérieure (34) du dispositif recirculateur (30) et/ou de gaz de traitement frais (44) asservis à des moyens de maintien de la qualité d'eau en fin de traitement.

14. Installation selon la revendication 13, caractérisée en ce que lesdits moyens d'injection (43) comprennent au moins une colonne de dissolution (54) sensiblement verticale, dans laquelle ledit liquide circule de haut en bas, ladite colonne comportant dans sa partie supérieure une chambre d'introduction en continu desdits gaz de traitement (53).

15. Installation selon la revendication 14, caractérisée en ce que ladite colonne (54) comporte également une hélice (51) d'aspiration entraînée en rotation dans le sens de circulation dudit liquide.

16. Installation selon la revendication 15, caractérisée en ce que ladite colonne (54) comporte localement une paroi médiane (52) coopérant avec ladite hélice (51) de façon à former un dispositif de recirculation.

17. Installation selon l'une quelconque des revendications 1 à 16 caractérisée en ce qu'elle comprend des moyens (20,30,40) de traitement d'une fraction prédéterminée du flux total (12) de liquide à traiter, lesdits moyens (20,30, 40) de traitement de fraction de flux (12) coopérant avec des moyens de mélange en ligne dans une zone turbulente de ladite fraction du flux traitée avec le reste du flux.

18. Installation selon l'une quelconque des revendications 1 à 17 caractérisée en ce qu'elle comprend au moins deux dispositifs de traitement comprenant des moyens (20) d'adjonction, un dispositif recirculateur (30) et des moyens-contacteurs (40), montés en parallèle sur une même canalisation de liquide à traiter, et des moyens de sélection du nombre desdits dispositifs actifs, en fonction du débit de liquide à traiter.

19. Installation selon l'une quelconque des revendications 1 à 18 caractérisée en ce que ledit gaz de traitement (11) appartient au groupe comprenant l'ozone, l'air ozoné, l'oxygène, le dioxyde de soufre, le dioxyde de carbone et le chlore.

20. Utilisation de l'installation selon l'une quelconque des revendications 1 à 19 caractérisée en ce que le temps de contact dudit flux de liquides (12) avec ledit gaz de traitement (11) dans ledit dispositif recirculateur (30) est inférieur à 60 secondes.

## Claims

1. Installation for the treatment of liquid flows (12) according to the process of Claim 1, characterised in that it comprises:
- means (20) for adding the treatment gas (11) to the flow of liquids (12) in order to form a homogenous two-phase treatment medium (13);
- means (30) for the forced dissolution of the said treatment gas (11) in the liquid flow (12) to be treated, cooperating with degassing means for the said two-phase treatment medium (13), so as to produce a monophase treatment medium (15);
- and contactor means (40) providing a plug flow of the degassed monophase treatment medium (15) during the said predetermined treatment period,
the said dissolution and degassing means (30) consisting of a recirculator device comprising two chambers (31, 33) separated by a substantially vertical wall (39) and communicating with each other at their lower (35) and upper (34) parts, and the said device comprising:
- in its lower part (35), means for injecting the said two-phase treatment medium (13) into one of the chambers (31, 33);
- in its upper part (34), means (32) for the recirculation and complementary dissolution of the undissolved treatment gas (36);
- means (37; 37_{A}, 37_{B}; 38_{A}, 38_{B}) for discharging the said degassed monophase treatment medium (15) in the direction of the said contactor means (40);
in such a way that the said treatment medium (13) is stirred in a circular flow looped from one chamber to the other.

2. Installation according to Claim 1, characterised in that the said means (20) for injecting the said treatment gas (11) comprise at least one static mixer and/or at least one injector.

3. Installation according to Claim 2, characterised in that the said injector is of the venturi injector type.

4. Installation according to one of Claims 1 to 3, characterised in that the said chambers consist of a first, central chamber (31) forming a shaft, surrounded by a second, annular chamber (33).

5. Installation according to any one of Claims 1 to 4, characterised in that the said wall (39) separating the chambers (31, 33) has holes for the passage of portions of the said flow of the treatment medium (13).

6. Installation according to any one of Claims 1 to 5, characterised in that at least one of the said chambers (31, 33) includes means (50) for the forced recirculation of the said two-phase treatment medium (13) in the said direction of recirculation and/or dynamic dissolution of the said treatment gas (11) in the treatment medium (13).

7. Installation according to any one of Claims 1 to 6, characterised in that at least one of the said chambers (31, 33) includes means (50) for the forced stirring of the top surface of the said two-phase treatment medium (13) so as to bring about the recovery and recirculation of the gas vented from the degassing (36) and/or the atomization of the bubbles of treatment gas (11).

8. Installation according to either one of Claims 6 or 7, characterised in that the said forced recirculation means (50) and/or the said stirring means (50) consist of a mechanically driven propeller or other device situated in the said central chamber (31) forming a shaft.

9. Installation according to Claim 8, characterised in that the said propeller (50) is rotated in the opposite direction with respect to the direction of circulation of the treatment medium (13).

10. Installation according to any one of Claims 1 to 9, characterised in that the said recirculator device (30) comprises means for adding a reagent to the said liquid flow to be treated (12), such as a solid or liquid catalyst, coupled with a physical process, for example of the ultraviolet type.

11. Installation according to any one of Claims 1 to 10, characterised in that the said means for discharging the monophase treated liquid flow (15) from the said recirculator device (30) towards the said contactor means (40) comprise at least one of the following means:
- orifices,
- rings,
- sieves,
and in that the said discharge takes place at the bottom (37_{A}, 37_{B}) of the said recirculator device and/or at its vertical wall (38_{A}, 38_{B}).

12. Installation according to any one of Claims 1 to 11, characterised in that the said contactor means (40) comprise at least one of the following devices:
- baffle-plated tank,
- conduits,
- system of stacked and/or superimposed parallel conduits.

13. Installation according to Claim 12, characterised in that the said contactor means (40) comprise means (43) for injecting the said undissolved treatment gases (36) recovered in the said upper part (34) of the recirculator device (30) and/or fresh treatment gas (44), controlled by means for maintaining the quality of water at the end of treatment.

14. Installation according to Claim 13, characterised in that the said injection means (43) comprise at least one substantially vertical dissolution column (54), in which the said liquid circulates from top to bottom, the said column including in its upper part a chamber for the continuous introduction of the said treatment gases (53).

15. Installation according to Claim 14, characterised in that the said column (54) also includes a suction propeller (51), driven in rotation in the direction of circulation of the said liquid.

16. Installation according to Claim 15, characterised in that the said column (54) locally includes a median wall (52) cooperating with the said propeller (51) so as to form a recirculation device.

17. Installation according to any one of Claims 1 to 16, characterised in that it comprises means (20, 30, 40) for the treatment of a predetermined proportion of the total flow (12) of the liquid to be treated, the said means (20, 30, 40) for the treatment of a proportion of the flow (12) cooperating with means for in-line mixing in a turbulent zone of the said proportion of the flow treated with the rest of the flow.

18. Installation according to any one of Claims 1 to 17, characterised in that it comprises at least two treatment devices comprising adding means (20), a recirculator device (30) and contactor means (40), mounted in parallel on the same conduit for liquid to be treated, and means for selecting the number of the said active devices according to the volume of liquid to be treated.

19. Installation according to any one of Claims 1 to 18, characterised in that the said treatment gas (11) belongs to the group comprising ozone, ozonised air, oxygen, sulphur dioxide, carbon dioxide and chlorine.

20. Use of the installation according to any one of Claims 1 to 19, characterised in that the contact time for the said liquid flow (12) with the said treatment gas (11) in the said recirculator device (30) is less than 60 seconds.

## Patentansprüche

1. Anlage zur Behandlung von Flüssigkeitsströmen (12), dadurch gekennzeichnet, daß sie folgendes umfaßt :
- Mittel (20) zur Einleitung von Behandlungsgasen (11) in die Flüssigkeitsströme (12), um ein homogenes zweiphasiges Behandlungsmittel (13) zu bilden ;
- Mittel (30) für die erzwungene Auflösung des Behandlungsgases (11) in dem zu behandelnden Flüssigkeitsstrom (12), die mit Entgasungsmitteln des zweiphasigen Behandlungsmittels (13) zusammenwirken, um ein einphasiges Behandlungsmittel (15) zu bilden ;
- Kontakteinrichtung (40), die ein kolbenartiges Ausströmen des einphasigen entgasten Behandlungsmittels (15) während der vorgegebenen Behandlungszeit gewährleisten,
wobei die Entgasungs- und Auflösungsmittel (30) aus einer Rezirkulierungsvorrichtung bestehen, die zwei Kammern (31, 33) umfaßt, welche durch eine in etwa senkrechte Trennwand (39) voneinander getrennt sind und am unteren (35) sowie am oberen Teil (34) miteinander kommunizieren, wobei die Vorrichtung umfaßt :
- im unteren Teil (35), Mittel zum Einleiten des zweiphasigen Behandlungsmittels (35) in eine der Kammern (31, 33) ;
- im oberen Teil (34), Mittel (32) zum Rezirkulieren und zum zusätzlichen Auflösen nicht aufgelöster Behandlungsgase (36) ;
- Mittel (37; 37_{A},37_{B}; 38_{A},38_{B}) zum Ableiten des einphasigen Behandlungsmittels (15) in Richtung der Kontakteinrichtung (40) ;
derart, daß das Behandlungsmittel (13) in einer Kreislaufströmung von einer Kammer zur anderen umgewälzt wird.

2. Anlage gemäß Anspruch 1, dadurch gekennzeichnet, daß die Mittel zum Einleiten (20) des Behandlungsgases (11) mindestens einen statischen Mischer und/oder mindestens eine Einspritzvorrichtung umfassen.

3. Anlage gemäß Anspruch 2, dadurch gekennzeichnet, daß das Mittel zum Einleiten eine Einspritzdüse vom Venturityp ist.

4. Anlage gemäß einem der Ansprüche 1 bis 3, dadurch gekennzeichnet, daß die Kammern jeweils aus einer ersten mittleren Kammer (31) bestehen, die einen Kamin bildet und durch eine zweite, ringförmige Kammer (33) umgeben ist.

5. Anlage gemäß einem der Ansprüche 1 bis 4, dadurch gekennzeichnet, daß die Trennwand (39) der Kammern (31, 33) Durchbrüche aufweist, um den Durchlauf des fließenden Behandlungsmittels (13) zu ermöglichen.

6. Anlage gemäß einem der Ansprüche 1 bis 5, dadurch gekennzeichnet, daß mindestens eine der Kammern (31, 33) über Mittel (50) zur erzwungenen Rezirkulierung des zweiphasigen Behandlungsmittels (13) in Rezirkulierungsrichtung und/oder zur dynamischen Auflösung des Behandlungsgases (11) im Behandlungsmittel (13) verfügt.

7. Anlage gemäß einem der Ansprüche 1 bis 6, dadurch gekennzeichnet, daß mindestens eine der Kammern (31, 33) über Mittel (50) zur erzwungenen Umwälzung der oberen Fläche des zweiphasigen Behandlungsmittels (13) verfügt, um das Wiederaufnehmen und die Rezirkulierung der Entgasungsabgase (36) und/oder eine Zerkleinerung der Blasen des Behandlungsgases (11) zu bewirken.

8. Anlage gemäß einem der Ansprüche 6 oder 7, dadurch gekennzeichnet, daß die Mittel (50) zur erzwungenen Rezirkulierung und/oder die Umwälzmittel (50) aus einem mechanisch oder anders angetriebenen Propeller bestehen, der sich in dem den Kamin bildenden Mittelraum (31) befindet.

9. Anlage gemäß Anspruch 8, dadurch gekennzeichnet, daß der Propeller (50) entgegen der Zirkulationsrichtung des Behandlungsmittels (13) angetrieben wird.

10. Anlage gemäß einem der Ansprüche 1 bis 9, dadurch gekennzeichnet, daß die Rezirkulierungsvorrichtung (30) über Mittel verfügt, um der zu behandelnden Flüssigkeit (12) ein Reagenz beizumischen, wie ein flüssiger oder fester Katalysator, der mit einem physikalischen Prozeß, beispielsweise des Ultraviolett-Typs, gekoppelt ist.

11. Anlage gemäß einem der Ansprüche 1 bis 10, dadurch gekennzeichnet, daß die Mittel zum Ableiten der Strömung einphasiger behandelter Flüssigkeit (15) aus der Rezirkulierungsvorrichtung (30) in die Kontakteinrichtung (40) mindestens eines der folgenden Mittel umfassen:
- Öffnungen
- Kränze
- Schutzfilter
und, daß das Ableiten auf der Höhe des Grundes (37_{A},37_{B}) und/oder auf der Höhe der senkrechten Wand (38_{A},38_{B}) der Rezirkulierungsvorrichtung stattfindet.

12. Anlage gemäß einem der Ansprüche 1 bis 11, dadurch gekennzeichnet, daß die Kontakteinrichtung (40) mindestens eine der folgenden Vorrichtungen umfassen:
- Wanne mit Ablenkplatten,
- Rohrleitung,
- Rohrleitungsnetz, wobei die Leitungen parallel zueinander aufeinander gestapelt sind und/oder übereinander liegen.

13. Anlage gemäß Anspruch 12, dadurch gekennzeichnet, daß die Kontakteinrichtung (40) über Mittel (43) zum Einleiten der nicht gelösten, im oberen Teil (34) der Rezirkulierungsvorrichtung (30) wiedergewonnenen Behandlungsgase (36) und/oder frischer Behandlungsgase (44) verfügen, die von Mitteln zum Aufrechterhalten der Wasserqualität am Ende der Behandlung gesteuert werden.

14. Anlage gemäß Anspruch 13, dadurch gekennzeichnet, daß die Mittel zum Einleiten (43) mindestens eine in etwa senkrechte Auflösungssäule (54) umfassen, in der die Flüssigkeit von oben nach unten zirkuliert, wobei sich im oberen Teil der Säule eine Kammer zum stetigen Einleiten der Behandlungsgase (53) befindet.

15. Anlage gemäß Anspruch 14, dadurch gekennzeichnet, daß die Säule (54) ebenfalls über einen Propeller zum Ansaugen (51) verfügt, der so angetrieben wird, daß er sich in Richtung des Flüssigkeitsumlaufs dreht.

16. Anlage gemäß Anspruch 15, dadurch gekennzeichnet, daß die Säule (54) örtlich über eine mittlere Wand (52) verfügt, die mit dem Propeller (51) derart zusammenwirkt, daß eine Rezirkulierungsvorrichtung gebildet wird.

17. Anlage gemäß einem der Ansprüche 1 bis 16, dadurch gekennzeichnet, daß sie über Mittel (20, 30, 40) zur Behandlung eines vorgegebenen Anteils des Gesamtflusses (12) zu behandelnder Flüssigkeit verfügt, wobei diese Mittel (20, 30, 40) zur Behandlung des Teilflusses (12) mit Mitteln zur linearen Vermischung dieses behandelten Teilflusses mit dem Rest des Flusses innerhalb einer Turbulenzzone zusammenwirken.

18. Anlage gemäß einem der Ansprüche 1 bis 17, dadurch gekennzeichnet, daß sie mindestens zwei Behandlungsvorrichtungen umfaßt, welche über Mittel (20) zum Hinzufügen, über ein Rezirkulierungsmittel (30) und über eine Kontakteinrichtung (40) verfügt, die parallel auf derselben Rohrleitung für die behandelte Flüssigkeit angebracht sind, sowie über Mittel, welche in Abhängigkeit der Durchflußmenge der zu behandelnden Flüssigkeit die Anzahl dieser Vorrichtungen auswählen, die aktiv sein sollen.

19. Anlage gemäß einem der Ansprüche 1 bis 18, dadurch gekennzeichnet, daß das Behandlungsgas (11) der Gruppe angehört, die Ozon, ozonhaltige Luft, Sauerstoff, Schwefeldioxid, Kohlendioxid und Chlor umfaßt.

20. Anlage gemäß einem der Ansprüche 1 bis 19, dadurch gekennzeichnet, daß die Berührungsdauer der Flüssigkeitsströmung (12) mit dem Behandlungsgas (11) in der Rezirkulierungsvorrichtung (30) weniger als 60 Sekunden beträgt.
